# EUROPÄISCHE PATENTANMELDUNG

(11) **EP 0 881 266 A2**
(43) Veröffentlichungstag der Anmeldung: **02.12.1998**
(21) Anmeldenummer: 98108613.5
(22) Anmeldetag: 12.05.1998
(51) Int. Cl.: C08L 101/04, C08F 214/26, C08F 236/16

(54) **Denaturierung von adsorbierten Eiweissstoffen inhibierende Polymere**

(30) Priorität: 31.05.1997 DE 19722953
(71) Anmelder: HÜLS AKTIENGESELLSCHAFT, 45764 Marl (DE)
(72) Erfinder: Lohr, Frauke, Dr., 45657 Recklinghausen (DE); Bree, Martina, Dr., 10709 Berlin (DE); Motschmann, Hubert, Dr., 12055 Berlin (DE); Pawlik, Andreas, Dr., 38159 Vechelde (DE); Vieira, Euridice, 4810 Guimaraes (PT)

(57) **Zusammenfassung**

Die Erfindung betrifft die Denaturierung von Eiweißkörpern inhibierende Polymere, die dadurch gekennzeichnet sind, daß sie zumindest an der Oberfläche Struktureinheiten mit 2 oder 3 Fluoratomen an einem ersten Kohlenstoffatom aufweisen, das an ein zweites Kohlenstoffatom gebunden ist, welches eine Hydroxylgruppe trägt, aber keine weitere Trifluormethylgruppe trägt, sofern das erste Kohlenstoffatom 3 Fluoratome trägt. Die Erfindung betrifft weiterhin Erzeugnisse, die aus einem solchen Polymer bestehen oder Teile aus einem solchen Polymer enthalten, sowie die Verwendung dieser Erzeugnisse für medizinische oder biotechnische Anwendungen.

## Beschreibung

Die Erfindung betrifft Polymere, die die Denaturierung von adsorbierten Eiweißkörpern inhibieren, Verfahren zu ihrer Herstellung, Erzeugnisse, wie Geräte und andere Gegenstände, die aus den Polymeren bestehen oder Teile aus diesen Polymeren enthalten, sowie die Verwendung dieser Erzeugnisse für biotechnische oder medizinische Zwecke.

In der Medizintechnik werden häufig Geräte oder andere Gegenstände aus polymeren Materialien verwendet, die kurz-, mittel- oder längerfristig mit Körperflüssigkeiten, wie Lymphe und Blut, oder mit Gewebe in Berührung kommen. Solche Geräte und Gegenstände sind z.B. Implantate, Sonden, Katheter, Drainageschläuche, Stents, Herzklappen und Herzschrittmacher. An deren Oberflächen werden im Körper befindliche Eiweißstoffe, z.B. Immunoglobuline und Gerinnungsfaktoren, wie Thrombin, oder Eiweißstoffe enthaltende Zellen, die in Körperflüssigkeiten oder im Gewebe vorkommen, wie Makrophagen, Blutzellen, Gewebezellen und Bakterien, adsorbiert. Die Adsorption solcher biologischen Spezies ist in der Regel mit einer Konformationsänderung verbunden, die zu einem Verlust der biologischen Wirksamkeit führt. Derartige strukturelle Änderungen werden im allgemeinen als Denaturierung bezeichnet. Dabei bricht die intramolekulare Wechselwirkung, vornehmlich über Wasserstoffbrücken, und damit auch die α-Helix-Struktur zusammen, die nahezu allen Eiweißstoffen zumindest in Teilbereichen zueigen ist. Denaturierte Eiweißstoffe begünstigen die Besiedelung der Oberflächen mit Bakterien, die wiederum zu entzündlichen Prozessen Anlaß geben, wie sie nicht selten bei Patienten eintreten, die unter Verwendung solcher Geräte oder Gegenstände behandelt werden. Adhärierende und dadurch aktivierte Thrombozyten können in einer vielstufigen Reaktionskaskade zur Bildung von Thromben bzw. zu einer Embolie führen. Es wäre daher erwünscht, über polymere Materialien verfügen zu können, die die Denaturierung von Eiweißstoffen hemmen oder gar aufheben und somit verhindern, daß die erwähnten oder andere unerwünschte und nicht selten verhängnisvolle Folgereaktionen ablaufen.

Die Adsorption von Eiweißkörpern spielt auch bei biotechnischen Verfahren eine Rolle, z.B. bei Bioreaktoren, bei denen Enzyme auf unterschiedlichen Trägermaterialien immobilisiert werden. Dies kann z.B. durch Quervernetzung, Bindung an den Träger durch Adsorption, ionische Wechselwirkungen oder aber durch Einschluß der Eiweißstoffe realisiert werden. Die biologische Aktivität der immobilisierten Eiweißstoffe sollte über Monate erhalten bleiben, was den Erhalt der der nativen Konformation des aktiven Zentrums erfordert.

Daneben ist die Nativität adsorbierter Proteine für die Affinitätschromatographie von hoher Bedeutung, die der Isolierung oder Anreicherung von speziellen Eiweißstoffen aus komplexen biologischen Systemen, wie Blut oder Lymphe, dient. Bei der Verwendung von polymeren Werkstoffen, z.B. als Säulenmaterialien, für Lagerbehälter oder Schläuche sowie als Membranen zur Fixierung von Enzymen, besteht die Gefahr, daß ein Teil der Eiweißstoffe, sei es durch ungewollte Adsorption oder durch erwünschte Immobilisierung, dauerhaft denaturiert wird.

Es ist eine Aufgabe der Erfindung, polymere Materialien zur Verfügung zu stellen, die die Denaturierung von auf der Oberfläche immobilisierten Eiweißstoffen nachhaltig inhibieren. Eine weitere Aufgabe der Erfindung besteht in der Bereitstellung von Verfahren zur Herstellung solcher polymerer Materialien. Schließlich ist es eine Aufgabe der Erfindung, eine vorteilhafte Verwendung für die polymeren Materialien vorzuschlagen.

Einer der Gegenstände der Erfindung sind die Denaturierung von Eiweißstoffen inhibierende Polymere, die dadurch gekennzeichnet sind, daß sie zumindest an der Oberfläche charakteristische, wirkungsbestimmende Struktureinheiten mit 2 oder 3 Fluoratomen an einem ersten Kohlenstoffatom aufweisen, das an ein zweites Kohlenstoffatom gebunden ist, welches eine Hydroxylgruppe trägt, aber keine weitere Trifluormethylgruppe trägt, sofern das erste Kohlenstoffatom 3 Fluoratome trägt.

Ein anderer Gegenstand der Erfindung sind verschiedene, in der Folge im einzelnen beschriebene Verfahren zur Herstellung solcher polymerer Materialien.

Schließlich sind ein Gegenstand der Erfindung Erzeugnisse, wie Geräte und Gegenstände, die aus erfindungsgemäßen Polymeren bestehen oder Teile aus erfindungsgemäßen Polymeren enthalten und bei deren bestimmungsgemäßer Verwendung diese Polymeren mit nativen Eiweißstoffen in Berührung kommen.

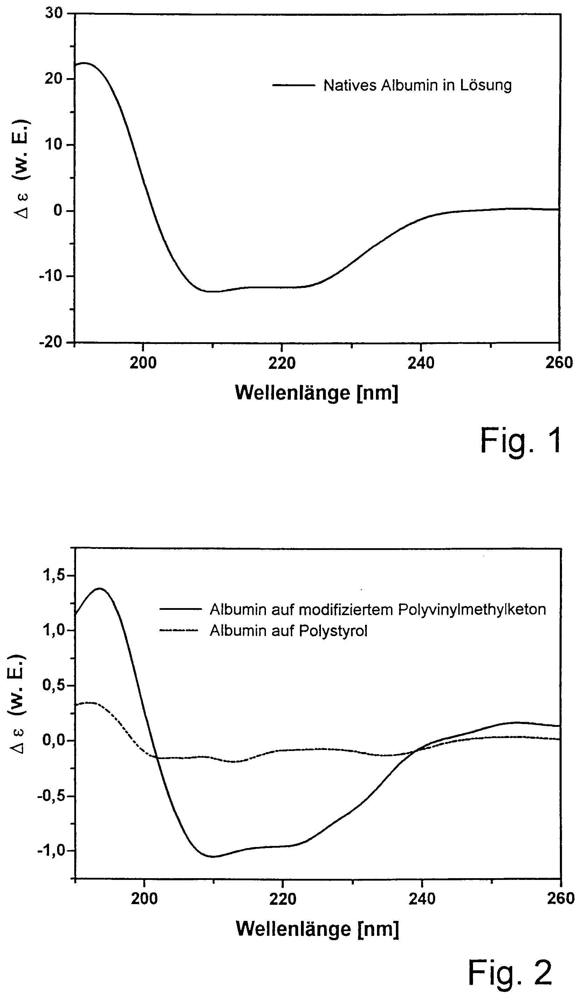

Die inhibierende Wirkung der erfindungsgemäßen Polymeren geht aus den Figuren 1 bis 4 hervor. An den Beipielen des Humanserumalbumins (HSA) und des Humanfibrinogens (HFb) wird gezeigt, daß die Spektren der gelösten und der an einem erfindungsgemäßen Polymeren adsorbierten nativen Eiweißstoffe weitgehend übereinstimmen, während die Spektren der an einem nicht erfindungsgemäßen Polymeren adsorbierten, denaturierten Eiweißsstoffe deutlich davon abweichen.

Überraschenderweise wird die Denaturierung von Eiweißkörpern, die als solche oder als Bestandteile von Zellen in Körperflüssigkeiten oder im Gewebe enthalten sind, durch die erfindungsgemäßen Polymeren wirkungsvoll und nachhaltig inhibiert. Diese Wirkung ist besonders ausgeprägt, wenn drei Fluoratome an dem ersten Kohlenstoffatom stehen, das dem zweiten Kohlenstoffatom mit der Hydroxylgruppe benachbart ist. Es kann offen bleiben, ob die erfindungsgemäßen Polymeren die Denaturierung nativer Eiweißkörper verhindern oder denaturierte Eiweißkörper unverzüglich renaturieren. Im Rahmen dieser Erfindung soll die Bezeichnung "inhibieren" beide Möglichkeiten einschließen.

Polymere mit Struktureinheiten, die ein einfach fluorsubstituiertes Kohlenstoffatom enthalten, das an ein Kohlenstoffatom mit Hydroxylgruppe gebunden ist, sind bekannt (SU-802429). Weiterhin sind Polymere mit Struktureinheiten bekannt, die eine Trifluormethylgruppe enthalten, welche an ein Kohlenstoffatom mit Hydroxylgruppe gebunden ist, das eine weitere Trifluormethylgruppe trägt (DE-A-1957963, DE-A-2021069, DE-A-4207261, DE-A-4207264, US-A 3414549, US-A 3438946, US-A 3444148, US-A-3549705, US-A 3696081, US-A-4640965, US-A-4690993, US-A-5241007, US-A-5320716, US-A-5506309, US-A-5532106, US-A-5536616, JA-A-01293337, JA-A-02120354, JA-A-02120355, JA-A-02120356, JA-A-05303907, JA-A-07120926, JA-A-50143888, JA-A-52023192, JA-A-52076299, JA-A-55102629, JA-A-57194276, JA-A-61284761, JA-A-62014647, JA-A-62015543, JA-A-62143046, JA-A-62186907, JA-A-62240953, FR-A-1541003, FR-A-2074835, EP-A-0043948, EP-A-0057065, WO-A-8809799, WO-A-9319111). In keiner der Vorveröffentlichungen ist jedoch erwähnt, daß solche Polymere die Denaturierung von immobilisierten Eiweißstoffen inhibieren.

Die erfindungsgemäßen Polymeren haben ein Polymergerüst, das durch beliebige bekannte Aufbaureaktionen entstanden sein kann. Dazu gehören durch radikalische Polymerisation von Monomeren mit olefinischer Doppelbindung entstandene Polymergerüste ebenso wie Polymergerüste, die auf andere Weise synthetisiert wurden, z.B. durch Polykondensationsreaktionen, wie Polyamide und gesättigte Polyester; durch Polyadditionsreaktionen, wie Polyurethane, Polyharnstoffe oder Polyalkylenglykole; durch Äquilibrierungsreaktionen, wie Polysiloxane; oder durch eine Kombination der genannten Reaktionstypen.

Die erwähnten charakteristischen, wirkungsbestimmenden Struktureinheiten können schon während der Synthese der Polymeren durch Verwendung entsprechender Monomerer eingeführt werden. Sie befinden sich dann sowohl auf der Oberfläche als auch im Bulk. Alternativ können diese Struktureinheiten auch durch nachträgliche Modifizierung von Polymeren geschaffen werden. In diesem Falle finden sich die charakteristischen Struktureinheiten, je nach der Methode der Modifizierung, auf der Oberfläche und im Bulk oder nur auf der Oberfläche des Polymers. In der Folge werden verschiedene, an sich bekannte Methoden zur Herstellung von erfindungsgemäßen Polymeren skizziert:
(1) Radikalisch, anionisch oder kationisch (z.B. durch UV-Strahlung, Plasma oder thermisch) initiierte (Co)polymerisation von olefinisch ungesättigten, 2 oder 3 Fluoratome und eine Hydroxylgruppe an vicinalen Kohlenstoffatomen enthaltenden Monomeren. Solche Monomere sind z.B. 2-(Trifluormethyl)-3-buten-2-ol oder 2-(Trifluormethyl)-4-penten-2-ol, die aus 1,1,1-Trifluoraceton durch Grignard-Reaktion mit Vinylmagnesiumbromid bzw. Allylmagnesiumbromid erhältlich sind. Ein weiteres geeignetes Monomer ist 4-(1-Hydroxy-1-trifluormethylethyl)-styrol, das analog durch Grignardreaktion von 1,1,1-Trifluoraceton mit p-Bromstyrol hergestellt werden kann. Geignete Comonomere für die Herstellung von Copolymeren sind z.B. Ethylen, Propen, 1-Buten, Isobuten, Acrylester, Vinylacetat, Vinylbutylether, Styrol, Acrylnitril, Acrylamid und/oder 1,3-Butadien.
(2) Radikalisch, anionisch oder kationisch (z.B. durch UV-Strahlung, Plasma oder thermisch), initiierte Pfropfung von olefinisch ungesättigten, 2 oder 3 Fluoratome und eine Hydroxylgruppe an vicinalen Kohlenstoffatomen enthaltenden Monomeren auf vorgebildete Polymere. Geeignete Monomere sind z.B. die unter (1) erwähnten 2-(Trifluormethyl)-3-buten-2-ol, 2-(Trifluormethyl)-4-penten-2-ol und 4-(1-Hydroxy-1-trifluormethylethyl)-styrol. Gleichzeitig können weitere Comonomere gepfropft werden, z.B. sulfonatgruppenhaltige Monomere, wie Natriumstyrolsulfonat oder Natriumvinylsulfonat, in Verbindung mit carboxylgruppenhaltigen Monomeren, wie Acryl- oder Methacrylsäure und Maleinsäure. Auf diese Weise werden den Polymeren zusätzlich andere bioaktive Eigenschaften erteilt, wie bakterienhemmende und zellproliferationsinhibierende oder bakterienhemmende und zellproliferationsfördernde Eigenschaften, wie in der deutschen Patentanmeldung 197 20 370.1 beschrieben.
(3) Radikalisch initiierte Polymerisation von olefinisch ungesättigten, zwei Fluoratome an einem doppelt gebundenen Kohlenstoffatom enthaltenden Monomeren, wie 1,1,2,2-Tetrafluorethylen, mit einem Vinylester, wie Vinylacetat oder -propionat, gegebenenfalls zusammen mit anderen Comonomeren, und anschließende Hydrolyse der Estergruppen.
(4) Reduktion der Carbonylfunktion in Copolymeren aus Tetrafluorethylen und Kohlenmonoxid mit der Struktur -(-CF₂-CF₂-)ₓ-(CO)_{y}- zu Hydroxylgruppen.
(5) Unvollständige Reduktion der Carbonylfunktion in Copolymeren aus Tetrafluorethylen und Kohlenmonoxid mit der Struktur -(-CF₂-CF₂-)ₓ-(CO)_{y}- zu Hydroxylgruppen und kovalente Anbindung des Copolymers an andere Polymere über die verbliebenen Carbonylgruppen, z.B. durch Reaktion mit primären Aminogruppen unter Bildung von Iminen, die gegebenenfalls, z.B. mit NaBH₄, nachträglich zum sekundären Amin reduziert werden.
(6) Modifizierung von Polysiloxanen mit SiH-Gruppen bei der Vernetzung von Zweikomponenten-Gemischen zur Herstellung eines Silicongummis durch Platin-katalysierte Hydrosilylierung unter Mitverwendung eines olefinischen oder acetylenischen Monomers mit 2 oder 3 Fluoratomen und einer Hydroxylgruppe an vicinalen Kohlenstoffatomen. Beispiele sind wiederum die unter (1) genannten Monomeren 2-(Trifluormethyl)-3-buten-2-ol, 2-(Trifluormethyl)-4-penten-2-ol und 4-(1-Hydroxy-1-trifluormethylethyl)-styrol. Dabei kann das fluorhaltige Monomer sowohl in oder auf das zu vernetzende Gemisch gegeben als auch nachträglich nach der Formgebung angewandt werden, sofern die SiH-Gruppen enthaltende Komponente in einem stöchiometrischen Überschuß über den Vernetzer mit mehr als einer olefinischen Doppelbindung pro Molekül angewandt wurde.
(7) Modifizierung von Polysiloxanen mit Vinylgruppen bei der Vulkanisation von Einkomponentensystemen zur Herstellung von Silicongummi durch Vernetzung mit Peroxiden durch Zugabe eines olefinischen oder acetylenischen Monomers mit 2 oder 3 Fluoratomen und einer Hydroxylgruppe an vicinalen Kohlenstoffatomen. Beispiele sind wiederum die unter (1) genannten Monomeren 2-(Trifluormethyl)-3-buten-2-ol, 2-(Trifluormethyl)-4-penten-2-ol und 4-(1-Hydroxy-1-trifluormethylethyl)-styrol. Auch hier kann das fluorhaltige Monomer sowohl in oder auf das zu vernetzende Gemisch gegeben als auch nach der Formgebung auf die Oberfläche gepfropft werden.
(8) Umsetzung von Polymeren mit reaktiven Carbonylgruppen in der Hauptkette (z.B. Copolymeren aus Ethylen und Kohlenmonoxid) oder in der Seitenkette (z.B. Polyvinylmethylketon) mit Trifluormethylsilan zu Polymeren mit 3 Fluoratomen und einer Hydroxylgruppe an vicinalen Kohlenstoffatomen.
(9) Unvollständige Umsetzung von Polymeren mit reaktiven Carbonylgruppen in der Hauptkette oder in der Seitenkette gemäß (8) und kovalente Anbindung des Copolymers an andere Polymere über die verbliebenen Carbonylgruppen, z.B. durch Reaktion mit primären Aminogruppen unter Bildung von Iminogruppen, die gegebenenfalls, z.B. mit NaBH₄, nachträglich zu sekundären Aminogruppen reduziert werden.
(10) Umsetzung von Carbonsäuregruppen oder Carbonsäurechloridgruppen enthaltenden Polymeren, die z.B. aus (Meth)acrylsäure als Monomer enthaltenden Copolymeren unschwer erhältlich sind, mit primären oder sekundären Aminen, die an vicinalen Kohlenstoffatomen 2 oder 3 Fluoratome und eine Hydroxylgruppe enthalten. Als Beispiel für ein geeignetes primäres Amin sei 1,1,1-Trifluor-2-hydroxy-3-aminopropan genannt. Hierbei muß die Hydroxylgruppe gegebenenfalls während der Reaktion mit einer Schutzgruppe versehen werden, z.B. durch Umsetzung mit Trimethylchlorsilan oder 1,1-Dimethylethylchlorid, die nach der Anbindung des fluorhaltigen Amins über eine Amidbindung wieder abgespalten wird.
(11) Umsetzung von freie Hydroxylgruppen, Aminogruppen oder sekundäre Amidgruppen enthaltenden Polymeren mit fluorhaltigen Epoxiden, wobei die erfindungsgemäßen Struktureinheiten entweder in dem fluorhaltigen Epoxid enthalten sind oder durch die Umsetzung mit dem fluorhaltigen Epoxid geschaffen werden. Hierdurch können z.B. die Oberflächen von Polyamiden oder Polyurethanen modifiziert werden. Dazu kann man auf Polyurethanen durch saure oder alkalische Hydrolyse unter teilweiser Kettenspaltung freie Aminogruppen schaffen. Aminogruppen lassen sich auch durch NH₃-Plasmabehandlung auf der Oberfläche von Polymeren erzeugen. Die Carbonamidgruppen auf der Oberfläche von Polyamiden können zunächst, z.B. durch Einwirkung von Natriumhydrid, deprotoniert und so für die Umsetzung mit dem fluorhaltigen Epoxid vorbereitet werden. Freie Hydroxylgruppen enthalten z.B. Polyester, wenn sie mit einem Polyolüberschuß hergestellt oder mit basischen Mitteln hydrolysiert wurden. Auf die Polymeren mit den genannten, gegebenenfalls durch eine Vorbehandlung erzeugten Funktionalitäten läßt man dann ein fluorhaltiges Epoxid einwirken, z.B. 1,1,1-Trifluor-2,3-epoxypropan. Die Anbindung erfolgt durch Ringöffnung des Epoxids unter Ausbildung der erfindungsgemäßen Struktureinheit. Durch weitere Reaktion mit fluorhaltigen Epoxiden kann es zu einem Aufwachsen von Ketten kommen, was unter basischen oder sauren Bedingungen gefördert wird. Wenn man von einem fluorhaltigen Epoxid ausgeht, das die erfindungsgemäße Struktureinheit von vornherein enthält, tragen die Ketten diese erfindungsgemäße Struktureinheit in erhöhter Konzentration längs der Kette. Solche fluorhaltigen Epoxide sind z.B. 3-Hydroxy-4,4,4-trifluor-1,2-epoxybutan und 3-Hydroxy-3-trifluormethyl-1,2-epoxybutan. Sie können aus den unter (1) erwähnten entsprechenden Olefinen durch Epoxidierung, z.B. mit m-Chlorperbenzoesäure, hergestellt werden. Für die Anbindung unter anionischen Bedingungen sind die Hydroxylgruppen zu schützen, z.B. mit Trimethylsilylchlorid oder als Acetatgruppen, wobei die Hydroxylgruppen nach der Anbindung hydrolytisch regeneriert werden.
(12) Umsetzung von vorgebildeten Polymeren mit freien Hydroxylgruppen, Aminogruppen oder sekundären Amidgruppen zunächst mit einem Spacer und dann mit einem fluorhaltigen Epoxid mit der charakteristischen Struktureinheit mit Fluor und Hydroxylgruppe in der Seitenkette. Dabei werden zunächst die Sauerstoffatome bzw. die Stickstoffatome (z.B. in Polyamiden oder Polyurethanen) deprotoniert, z.B. mit Natriumhydrid, und dann mit alpha, omega-Dicarbonsäuren oder deren Halogeniden im Überschuß umgesetzt. An das freie Ende der Dicarbonsäure-Kette wird dann ein fluorhaltiges Epoxid angebunden, wodurch, je nach Art des fluorhaltigen Epoxids, die erfindungsgemäße Struktureinheit geschaffen oder eingeführt wird. Die Ausführungen über die fluorhaltigen Epoxide und das Kettenwachstum in (11) gelten entsprechend.
(13) Anionische, kationische, alkalisch oder sauer katalysierte Polymerisation von Epoxidverbindungen der Formel 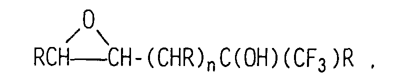 die zu Polymeren mit der Repetiereinheit
   -{RCH-CH[(CHR)ₙ)C(OH)CF₃)]-O}-
   und endständigen Gruppen der Formel
   -{RCH-CH[(CHR)ₙ)C(OH)CF₃)]-OH
   oder in modifizierter Form mit endständigen Gruppen der Formel
   -{RCH-CH[(CHR)ₙ)C(OH)CF₃)]-NH₂
   oder
   -{RCH-CH[(CHR)ₙ)C(OH)CF₃)]-CH=CH₂
   führt. In den Formeln steht R für Wasserstoff oder einen Methylrest und n für 0 oder eine ganze Zahl, insbesondere für 0 oder eine ganze Zahl von 1 bis 5. Die genannten Epoxidverbindungen können auch zusammen mit anderen Epoxiden, wie Ethylenoxid, Propylenoxid und 1,2-Epoxycyclohexan, polymerisiert werden. Die Polymeren können über die genannten endständigen funktionellen Gruppen an Polymere mit OH-, NH₂- oder -CH=CH₂-reaktiven Gruppen auf der Oberfläche von anderen Polymeren, z.B. Carbonsäurechloridgruppen oder Isocyanatgruppen, angebunden werden. Gegebenenfalls werden die wirkungsrelevanten sekundären Hydroxylgruppen zuvor geschützt, z.B. durch Blockierung mit Trimethylchlorsilan, und nach der Anbindung wieder entschützt.
(14) Anbindung von Polymeren mit den erfindungsgemäßen Struktureinheiten an Polymeroberflächen durch Aufbau eines interpenetrierenden Netzwerks. Hierzu eignen sich zum Beispiel die Polymeren nach (8) bzw. (12). Eine Beschichtung von Polyurethanen kann z.B. durch Eintauchen des Substrats in eine Lösung solcher Polymere in Gegenwart einer Polyhydroxylverbindung und eines Isocyanatpräpolymers in dieser Lösung erfolgen.

Alle unter (1) bis (14) genannten Polymeren lassen sich durch dem Fachmann bekannte Reaktionen herstellen. Die Verfahren sind Analogieverfahren, die zu neuen Polymeren mit einer überraschenden Eigenschaft führen.

Die Inhibierung der Denaturierung der adsorbierten oder immobilisierten Eiweißstoffe läßt sich durch Circulardichroismus(CD)-Spektroskopie nachweisen, mit deren Hilfe die absolute Konformation von chiralen Verbindungen aufgeklärt werden kann und Konformationsänderungen verfolgt werden können. Hierbei wird linear polarisiertes Licht, im allgemeinen im sichtbaren oder im UV-Bereich, durch die z.B. in Lösung vorliegende oder auf einem durchsichtigen Medium adsorbierte chirale Verbindung gestrahlt. Liegt die eingestrahlte Wellenlänge im Absorptionsbereich der chiralen Verbindung, so können elektronische Übergänge eintreten, die zu einer elliptischen Polarisierung des zuvor linear polarisierten Lichtes führen, das als Überlagerung einer rechts circular polarisierten und einer links circular polarisierten Teilwelle mit gleichen Amplituden aufgefaßt werden kann. Die Absorptionskoeffizienten einer chiralen Verbindung für die rechts circular bzw. links circular polarisierten Teilwellen sind nicht notwendigerweise identisch. Die Differenz der molaren dekadischen Absorptionskoeffizienten für die links circular bzw. die rechts circular polarisierte Teilwelle wird als Circulardichroismus bezeichnet. Nach dem Durchgang durch die Probe überlagern sich die nach der Absorption verbliebenen Anteile der ursprünglichen Teilwellen und ergeben ein elliptisch polarisiertes Licht, da sie im allgemeinen nicht mehr die gleiche Amplitude besitzen. Ändert man die Wellenlänge des eingestrahlten Lichtes, so erhält man ein Spektrum, das den Circulardichroismus als Funktion der Wellenlänge zeigt.

Ebenso kann die Probe nacheinander mit rechts bzw. links polarisiertem Licht durchstrahlt werden, wodurch man wie zuvor beschrieben, ein Differenzspektrum erhält, das Rückschlüsse auf die Struktur der chiralen Verbindung zuläßt, z.B. auf deren absolute Konformation.

Zu den mittels CD-Spektroskopie untersuchten chiralen Verbindungen gehören verschiedene Polypeptide und Eiweißstoffe (oder Proteine). Auch Konformationsveränderungen von Eiweißstoffen an Grenzflächen sind bereits CD-spektroskopisch untersucht worden (siehe z.B. Y.-H.Chen et al., Biochemistry, Vol.11, No. 22 (1972), 4120-4131; C.R.MacMillin et al., Journal of Colloid and Interface Science, 48, No.2, (1974) 345-349; L.J.Smith et al., Biochimica et Biophysica Acta, 1121 (1992) 111-118; W.Norde et al., Journal of Colloid and Interface Science, 112, No.2, 447-456; W.Norde et al., Colloids and Surfaces 64 (1992), 87-93).

Wenn die Substrate mit den adsorbierten Eiweißkörpern durchlässig für Licht der betreffenden Wellenlänge sind, kann man Transmissionsmessungen durchführen. Dies ist jedoch nicht möglich bei lichtundurchlässigen Substraten, für die sich Reflexionsmessungen anbieten. Voraussetzung hierfür ist jedoch, daß eine hinreichend stark reflektierende Oberfläche vorhanden ist, was häufig nicht zutrifft. Ein elegantes Verfahren zur Gewinnung von CD-Spektren adsorbierter Eiweißstoffen (und anderer chiraler Verbindungen) durch Reflexionsmessung ist in der deutschen Patentanmeldung 197 17 431.0 beschrieben.

Die erfindungsgemäßen Polymeren, die die charakteristische Struktureinheit im Bulk enthalten, lassen sich nach Verfahren zu Formteilen verarbeiten, wie sie in der Kunststofftechnik üblich sind, z.B. durch Spritzgießen, Preßspritzen, Extrudieren, Tiefziehen oder Gießen. Alternativ kann man die Formteile aus Standardpolymeren herstellen, die Oberflächen der Formteile nachträglich, wie beschrieben, modifizieren und so Formteile aus erfindungsgemäßen Polymeren erhalten. Weiterhin kann man die erfindungsgemäßen Polymeren zur Beschichtung von Formteilen aus anderen Polymeren benutzen. Die beiden letztgenannten Verfahren sind z.B. dann von Nutzen, wenn die mechanischen Eigenschaften der erfindungsgemäßen Polymeren, wie Biege- oder Reißfestigkeit, den Anforderungen für bestimmte Anwendungen nicht oder nicht voll entsprechen. Besonders gute Haftung wird erzielt, wenn man das erfindungsgemäße Polymer strahleninduziert auf die aktivierte Substratoberfläche pfropft, wie dies in den deutschen Patentanmeldungen 197 000 81.9, 197 000 82.7 und 197 000 83.5 beschrieben ist.

Man kann mit Hilfe der erfindungsgemäßen Polymeren Erzeugnisse, wie Geräte und andere Gegenstände, herstellen, die aus den erfindungsgemäßen Polymeren bestehen oder Teile aus erfindungsgemäßen Polymeren enthalten und bei deren bestimmungsgemäßer Verwendung diese Polymeren mit nativen Eiweißstoffen in Berührung kommen, deren Denaturierung verhindert werden soll. Letzteres ist vor allem bei medizinischen und biotechnischen Anwendungen der Fall. Solche Geräte oder andere Gegenstände sind u.a. Implantate, Sonden, Katheter, Schläuche (z.B. für Drainagen), Stents, Herzklappen und Herzschrittmacher sowie Behälter, Rohrleitungen, Bioreaktoren und Membranen.

Die folgenden Beispiele sollen die Erfindung weiter erläutern, nicht jedoch ihren Anwendungsbereich begrenzen.

### Beispiel 1

### Modifizierung eines Polyketons in der Bulkphase

2,1 g Polymethylvinylketon wurden in 50 ml Tetrahydrofuran (THF) vorgelegt. Unter Kühlung auf -18°C durch Aceton/Trockeneis wurden 5,7 g Trifluormethyltrimethylsilan und eine Spatelspitze Tetrabutylammoniumfluorid zugegeben. Innerhalb von 90 min wurde das Reaktionsgemisch auf Raumtemperatur erwärmt und 16 h bei Raumtemperatur gerührt. Dann wurde das Reaktionsgemisch 2 h am Rückfluß erhitzt, worauf das THF abdestilliert und der Rückstand in 100 ml Isopropanol aufgenommen wurde. Nach Zusatz von 4 g NaOH in Wasser wurde das Gemisch 2 h am Rückfluß erhitzt und danach mit konzentrierter Salzsäure angesäuert. Nach dem Entfernen des Isopropanols durch Destillation wurde das verbliebene Produkt mit 200 ml Diethylether und 200 ml Wasser aufgenommen. Durch Ausschütteln der Diethyletherphase mit Wasser wurden wasserlösliche Verunreinigungen abgetrennt. Die Diethyletherphase wurde mit Na₂SO₄ getrocknet. Das Lösungsmittel wurde in einem letzten Schritt destillativ entfernt, wobei 2,32 g eines gelben Pulvers erhalten wurden.

Ein Träger aus Quarzglas wurde durch Spin-Coaten mit einer 10%-igen Lösung des modifizierten Polymethylvinylketons in Aceton beschichtet. Der Träger wurde 20 min in eine 10⁻⁶ M Lösung von Humanserumalbumin (HSA; Fa. SIGMA) in phosphatgepufferter Lösung (PBS-Puffer der Fa. SIGMA) mit einem pH-Wert von 7,4 getaucht. Anschließend wurde die Lösung des Eiweißstoffes gegen reine Pufferlösung (PBS) ausgetauscht und in Transmission ein CD-Spektrum des adsorbierten HSA genommen (Figur 2, ausgezogene Kurve). Zum Vergleich wurde ein weiterer Quarzglasträger mittels Spin-Coaten einer 10 %-igen Lösung von Polystyrol (VESTYRON^{(R)}116 der Hüls AG) in THF (Fa. Aldrich) mit dem Polymer beschichtet. Hierauf wurde, wie zuvor beschrieben, HSA adsorbiert und ein CD-Spektrum gemessen (Figur 2, gestrichelte Kurve). Des weiteren wurde für einen Vergleich mit der nativen Struktur des HSA ein CD-Spektrum einer 10⁻⁶ M Lösung von HSA in phosphatgepufferter Lösung genommen (Figur 1). Ein Vergleich der 3 Spektren zeigt, daß HSA auf dem erfindungsgemäßen Polymer im Gegensatz zur Polystyroloberfläche unter Erhalt der nativen Konfiguration adsorbiert wird.

### Beispiel 2

### Modifizierung eines Polyamids an der Oberfläche

In einer Argonatmosphäre wurden 288,1 mg Natriumhydrid in 30 ml wasserfreiem CH₂Cl₂ vorgelegt. Die zu modifizierenden Spritzgußplättchen aus Polyamid ((T5000 der Hüls AG) wurden hinzugelegt. Zu der Lösung wurden langsam 491,4 mg 3,3,3-Trifluor-1,2-epoxypropan gegeben. Das Gemisch wurde 8 h am Rückfluß erhitzt und, nach Abkühlen, unter Eiskühlung mit 20 ml Wasser hydrolysiert. Die Spritzgußplättchen wurden entnommen, mit 5 %-iger NaCl-Lösung und mit Wasser gründlich gewaschen und bei 50°C getrocknet. Danach wurden die Spritzgußplättchen 12 h mit n-Hexan im Soxleth extrahiert. Anschließend wurde mittels Röntgenphotoelektronenspektroskopie (XPS) die Elementenzusammensetzung auf der Oberfläche der Spritzgußplättchen ermittelt, wobei die folgenden Werte erhalten wurden:

### Elementenzusammensetzung der Polymeroberfläche nach XPS (in Atom-%)

| Elemente | Peak | T5000 (theor.) | T5000 (gemessen) | T5000 (modifiz.) (gemessen) |
|---|---|---|---|---|
| C | 1s | 81,0 | 85,0 | 73,1 |
| N | 1s | 7,1 | 8,1 | 8,0 |
| O | 1s | 7,1 | 6,9 | 10,5 |
| F | 1s | - | - | 8,4 |

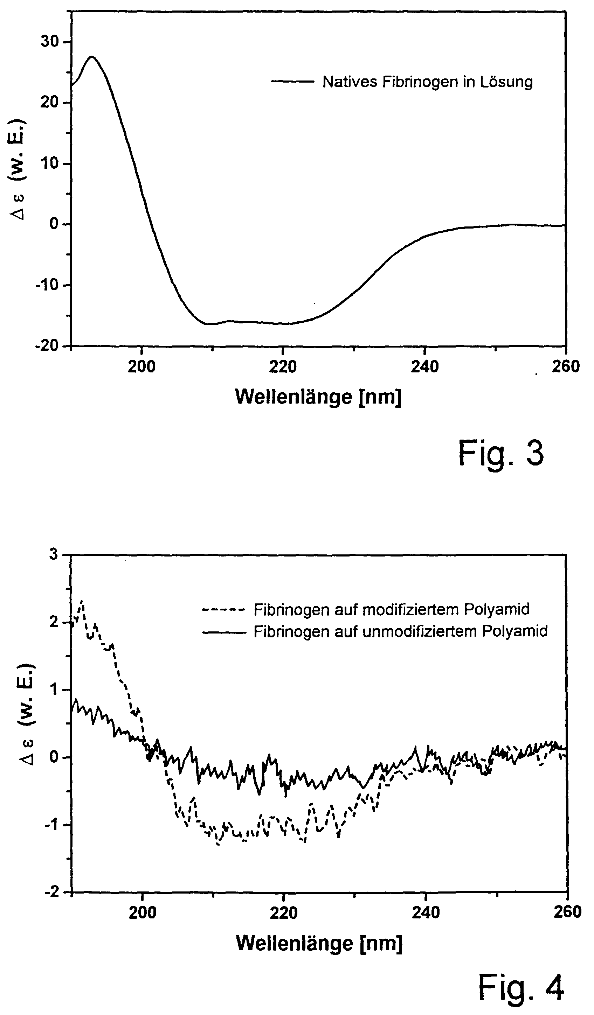

In einem nachfolgenden Schritt wurde die Struktur von adsorbiertem Fibrinogen auf der modifizierten Polyamidoberfläche im Vergleich zur unbehandelten Polyamidoberfläche verglichen. Hierzu wurden beide Proben 20 min in eine 10⁻⁶ M Lösung von Humanfibrinogen (HFb; Fa. SIGMA) in phosphatgepufferter Lösung (PBS-Puffer der Fa. SIGMA) mit einem pH-Wert von 7,4 getaucht. Anschließend wurde die HFb-Lösung gegen HFb-freie Pufferlösung ausgetauscht und in Reflexion jeweils ein CD-Spektrum der adsorbierten HFb-Schicht aufgenommen (Figur 4). Aus einem Vergleich der beiden CD-Spektren mit dem CD-Spektrum einer 10⁻⁶ M Lösung von HFb in phosphatgepufferter Lösung (Figur 3) ist deutlich erkennbar, daß das HFb auf der erfindungsgemäß modifizierten Oberfläche im Gegensatz zum unbehandelten Polyamid unter Erhalt seiner Konformation adsorbiert.

## Patentansprüche

1. Denaturierung von Eiweißkörpern inhibierende Polymere, dadurch gekennzeichnet, daß sie zumindest an der Oberfläche Struktureinheiten mit 2 oder 3 Fluoratomen an einem ersten Kohlenstoffatom aufweisen, das an ein zweites Kohlenstoffatom gebunden ist, welches eine Hydroxylgruppe trägt, aber keine weitere Trifluormethylgruppe trägt, sofern das erste Kohlenstoffatom 3 Fluoratome trägt.

2. Polymere nach Anspruch 1, dadurch gekennzeichnet, daß sie die Struktureinheiten auf der Oberfläche und im Bulk enthalten.

3. Polymere nach Anspruch 1, dadurch gekennzeichnet, daß sie die Struktureinheiten nur auf der Oberfläche enthalten.

4. Polymere nach einem der Ansprüche 1 bis 3, dadurch gekennzeichnet, daß die Struktureinheiten schon während der Synthese des Polymeren eingeführt wurden.

5. Polymere nach einem der Ansprüche 1 bis 3, dadurch gekennzeichnet, daß die Struktureinheiten nachträglich durch Modifizierung des Polymeren geschaffen wurden.

6. Verfahren zur Herstellung von Polymeren mit der Struktureinheit gemäß Anspruch 1, gekennzeichnet durch radikalisch, anionisch oder kationisch initiierte (Co)polymerisation von olefinisch ungesättigten, 2 oder 3 Fluoratome und eine Hydroxylgruppe an vicinalen Kohlenstoffatomen enthaltenden Monomeren.

7. Verfahren nach Anspruch 6, gekennzeichnet durch radikalisch, anionisch oder kationisch initiierte Pfropfung von olefinisch ungesättigten, 2 oder 3 Fluoratome und eine Hydroxylgruppe an vicinalen Kohlenstoffatomen enthaltenden Monomeren auf vorgebildete Polymere.

8. Verfahren nach Anspruch 6, gekennzeichnet durch radikalisch initiierte Polymerisation von olefinisch ungesättigten, zwei Fluoratome an einem doppelt gebundenen Kohlenstoffatom enthaltenden Monomeren mit einem Vinylester, gegebenenfalls zusammen mit anderen Comonomeren, und anschließende Hydrolyse der Estergruppen.

9. Verfahren nach Anspruch 6, gekennzeichnet durch Reduktion der Carbonylfunktion in Copolymeren aus Tetrafluorethylen und Kohlenmonoxid mit der Struktur -(-CF₂-CF₂-)ₓ-(CO)_{y}- zu Hydroxylgruppen.

10. Verfahren nach Anspruch 6, gekennzeichnet durch unvollständige Reduktion der Carbonylfunktion in Copolymeren aus Tetrafluorethylen und Kohlenmonoxid mit der Struktur -(-CF₂-CF₂-)ₓ-(CO)_{y}- zu Hydroxylgruppen und Fixierung des Copolymers auf anderen Polymeren über die verbliebenen Carbonylgruppen.

11. Verfahren nach Anspruch 6, gekennzeichnet durch Modifizierung von Polysiloxanen mit SiH-Gruppen bei der Vernetzung von Zweikomponenten-Gemischen zur Herstellung eines Silicongummis durch Platinkatalysierte Hydrosilylierung unter Mitverwendung eines olefinischen oder acetylenischen Monomers mit 2 oder 3 Fluoratomen und einer Hydroxylgruppe an vicinalen Kohlenstoffatomen.

12. Verfahren nach Anspruch 6, gekennzeichnet durch Modifizierung von Polysiloxanen mit Vinylgruppen bei der Vulkanisation von Einkomponentensystemen zur Herstellung eines Silicongummis durch Vernetzung mit Peroxiden durch Zugabe eines olefinischen oder acetylenischen Monomers mit 2 oder 3 Fluoratomen und einer Hydroxylgruppe an vicinalen Kohlenstoffatomen.

13. Verfahren nach Anspruch 6, gekennzeichnet durch Umsetzung von Polymeren mit reaktiven Carbonylgruppen in der Hauptkette oder in der Seitenkette mit Trifluormethylsilan.

14. Verfahren nach Anspruch 6, gekennzeichnet durch unvollständige Umsetzung von Polymeren mit reaktiven Carbonylgruppen in der Hauptkette oder in der Seitenkette gemäß Anspruch 13 und kovalente Anbindung des Copolymers an andere Polymere über die verbliebenen Carbonylgruppen.

15. Verfahren nach Anspruch 6, gekennzeichnet durch Umsetzung von Carbonsäuregruppen oder Carbonsäurechloridgruppen enthaltenden Polymeren mit primären oder sekundären Aminen, die an vicinalen Kohlenstoffatomen 2 oder 3 Fluoratome und eine Hydroxylgruppe enthalten.

16. Verfahren nach Anspruch 6, gekennzeichnet durch Umsetzung von freie Hydroxylgruppen, Aminogruppen oder sekundäre Amidgruppen enthaltenden Polymeren mit einem fluorhaltigen Epoxid mit 2 oder 3 Fluoratomen und einer Hydroxylgruppe an vicinalen Kohlenstoffatomen.

17. Verfahren nach Anspruch 6, gekennzeichnet durch Umsetzung von Polymeren mit freien Hydroxylgruppen, Aminogruppen oder sekundären Amidgruppen zunächst mit einem Spacer und dann mit einem fluorhaltigen Epoxid mit 2 oder 3 Fluoratomen und einer Hydroxylgruppe an vicinalen Kohlenstoffatomen.

18. Verfahren nach Anspruch 6, gekennzeichnet durch anionische, kationische, alkalisch oder sauer katalysierte (Co)polymerisation von Epoxidverbindungen der Formel 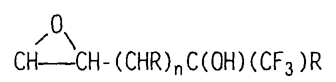 zu Polymeren mit der Repetiereinheit
-{RCH-CH[(CHR)ₙ)C(OH)CF₃)]-O}-
und endständigen Gruppen der Formel
-{RCH-CH[(CHR)ₙ)C(OH)CF₃)]-OH ,
wobei R für Wasserstoff oder einen Methylrest und n für 0 oder eine ganze Zahl steht.

19. Verfahren nach Anspruch 6, gekennzeichnet durch Anbindung von Polymeren mit den erfindungsgemäßen Struktureinheiten an Polymeroberflächen durch Aufbau eines interpenetrierenden Netzwerks.

20. Erzeugnisse, die aus einem Polymer nach einem der Ansprüche 1 bis 7 bestehen oder Teile aus einem solchen Polymer enthalten.

21. Verwendung der Erzeugnisse nach Anspruch 20 für medizinische oder biotechnische Anwendungen.
